# EUROPÄISCHE PATENTANMELDUNG

(11) **EP 4 553 662 A1**
(43) Veröffentlichungstag der Anmeldung: **14.05.2025**
(21) Anmeldenummer: 24206600.9
(22) Anmeldetag: 15.10.2024
(51) Int. Cl.: G06F 11/3668, G06F 11/3698

(54) **COMPUTER-IMPLEMENTIERTES VERFAHREN UND SYSTEM ZUM ERSTELLEN EINER KONFIGURATION EINES VIRTUELLEN TESTS**

(30) Priorität: 08.11.2023 DE 102023130869
(71) Anmelder: dSPACE GmbH, 33102 Paderborn (DE)
(72) Erfinder: Deppe, Markus, 33102 Paderborn (DE)

(57) **Zusammenfassung**

Die Erfindung betrifft ein computerimplementiertes Verfahren zum kriterienbasierten Erstellen einer Konfiguration (10) eines virtuellen Tests (VT) zum Testen automatisierter Fahrfunktionen eines Fahrzeugs, mit den Schritten Definieren (S1) einer Abhängigkeit von Konfigurationsparametern (12a, 12b) zu Zielgrößen (14) des virtuellen Tests (VT), Bestimmen (S2) eines Test-Algorithmus (A) und/oder von Parameterintervallen (16) für die jeweilige Zielgröße (14), und Festlegen (S3) einer Anwendungsbedingung (18) der Konfigurationsparameter (12a, 12b), der Parameterintervalle (16) und/oder des Test-Algorithmus (A). Des Weiteren betrifft die Erfindung ein System zum kriterienbasierten Erstellen einer Konfiguration (10) eines virtuellen Tests (VT) zum Testen automatisierter Fahrfunktionen eines Fahrzeugs.

## Beschreibung

Die vorliegende Erfindung betrifft ein computer-implementiertes Verfahren zum kriterienbasierten Erstellen einer Konfiguration eines virtuellen Tests zum Testen automatisierter Fahrfunktionen eines Fahrzeugs.

Des Weiteren betrifft die vorliegende Erfindung ein System zum kriterienbasierten Erstellen einer Konfiguration eines virtuellen Tests zum Testen automatisierter Fahrfunktionen eines Kraftfahrzeugs.

### Stand der Technik

Fahrassistenzsysteme wie z.B. ein adaptiver Geschwindigkeitsregler und/oder Funktionen für das hochautomatisierte Fahren können mithilfe diverser Überprüfungsmethoden verifiziert bzw. validiert werden. Dabei können insbesondere Hardware-in-the-Loop Verfahren, Software-in-the-Loop Verfahren, Simulationen und/oder Testfahrten verwendet werden.

Zur Erstellung von Testszenarien für Simulationen ist die Durchführung von Testfahrten erforderlich. Die hierdurch gewonnenen Sensordaten werden sodann in ein logisches Szenario abstrahiert.

"Szenario-Optimierung für die Absicherung von automatisierten und autonomen Fahrsystemen" (Florian Hauer, B. Holzmüller, 2019) offenbart Verfahren zur Verifikation und Validierung automatisierter und autonomer Fahrsysteme, insbesondere das Finden geeigneter Testszenarien für die virtuelle Absicherung.

Die Testmethodik sieht dabei die Adaption einer metaheuristischen Suche vor, um Szenarien zu optimieren. Hierfür muss ein passender Suchraum und eine geeignete Zielfunktion aufgestellt werden. Ausgehend von einer abstrakten Beschreibung der Funktionalität und Anwendungsfälle des Systems werden parametrisierte, insbesondere logische, Szenarien abgeleitet.

Zur Parametrierung logischer Szenarien zum Durchführen eines virtuellen Tests zum Testen automatisierter Fahrfunktionen eines Fahrzeugs können sodann sogenannte intelligente Test-Steuerverfahren (ITC) eingesetzt werden.

Um einen vorgegebenen Parameterraum bestmöglich abzudecken werden logische Szenarien herkömmlicherweise in der vollen Dimension unter der Annahme, dass alle Konfigurationsparameter in Kombination Einfluss auf alle Zielgrößen haben, parametriert. Dies führt zu einer hochdimensionalen monolithischen ITC-Konfiguration sowie einem dadurch bedingten hohen Rechenaufwand.

Der Konfigurationsvorgang für ein ITC-Experiment besteht herkömmlicherweise darin, dass dem Anwender abverlangt wird eine Liste von relevanten Parametern inkl. deren Wertebereich, eine Liste von Zielfunktionen (KPIs) inkl. Grenzwerten und das gewünschte Verfahren (vordefinierter Algorithmus zur Ausführung) festzulegen.

In der Ausführung startet das ITC-Verfahren mit dem Ziel in der Menge der möglichen Parametervariationen die durch die Zielfunktionen und deren Grenzwerte als relevant definierten Parametervariationen zu finden.

Der Konfigurationsschritt ist zum einen für den Anwender ein sehr anspruchsvoller Abstraktionsschritt ausgehend von dessen Entwicklungsproblem und zum anderen steht das Wissen über die vollzogene Abstraktion nicht für das ITC-Verfahren und der Auswertung der Ergebnisse zur Verfügung.

Demzufolge besteht ein Bedarf, derartige ITC-Verfahren dahingehend zu verbessern, dass vor allem relevante Parameterkombination, d.h. Parameterkombinationen, die einen definierten Einfluss auf die entsprechenden Zielgrößen des virtuellen Tests zum Testen der automatisierten Fahrfunktionen des Fahrzeugs aufweisen, bestimmt werden.

Es ist daher Aufgabe der Erfindung, ein Verfahren zum Erstellen einer Konfiguration eines virtuellen Tests zum Testen automatisierter Fahrfunktionen eines Fahrzeugs anzugeben, welches es ermöglicht, bei der Parametrierung logischer Szenarien vor allem Parameterkombinationen mit einzubeziehen, die einen definierten Einfluss auf die entsprechenden Zielgrößen des virtuellen Tests zum Testen der automatisierten Fahrfunktionen des Fahrzeugs aufweisen.

### Offenbarung der Erfindung

Die Aufgabe wird erfindungsgemäß durch ein computer-implementiertes Verfahren zum kriterienbasierten Erstellen einer Konfiguration eines virtuellen Tests zum Testen automatisierter Fahrfunktionen eines Fahrzeugs mit den Merkmalen des Patentanspruchs 1 gelöst.

Des Weiteren wird die Aufgabe erfindungsgemäß durch ein System zum kriterienbasierten Erstellen einer Konfiguration eines virtuellen Tests zum Testen automatisierter Fahrfunktionen eines Kraftfahrzeugs mit den Merkmalen des Patentanspruchs 13 gelöst.

Darüber hinaus wird die Aufgabe erfindungsgemäß durch ein Computerprogrammprodukt mit einem Computerprogramm, das Softwaremittel zur Durchführung eines erfindungsgemäßen Verfahrens umfasst, wobei das Computerprogramm auf einem Computer ausgeführt wird, mit den Merkmalen des Patentanspruchs 14 gelöst.

Ferner wird die Aufgabe erfindungsgemäß durch einen computerlesbaren Datenträger mit Programmcode eines Computerprogramms, um zumindest Teile eines erfindungsgemäßen Verfahrens auszuführen, wenn das Computerprogramm auf einem Computer ausgeführt wird, mit den Merkmalen des Patentanspruchs 15 gelöst.

Die Erfindung betrifft ein computer-implementiertes Verfahren zum kriterienbasierten Erstellen einer Konfiguration eines virtuellen Tests zum Testen automatisierter Fahrfunktionen eines Fahrzeugs. Das Verfahren umfasst ein Definieren einer Abhängigkeit von Konfigurationsparametern zu Zielgrößen des virtuellen Tests und ein Bestimmen eines Test-Algorithmus und/oder von Parameterintervallen für die jeweilige Zielgröße.

Des Weiteren umfasst das Verfahren ein Festlegen einer Anwendungsbedingung der Konfigurationsparameter, der Parameterintervalle und/oder des Test-Algorithmus.

Die Erfindung betrifft ferner ein System zum kriterienbasierten Erstellen einer Konfiguration eines virtuellen Tests zum Testen automatisierter Fahrfunktionen eines Kraftfahrzeugs. Das System umfasst eine erste Recheneinrichtung, welche konfiguriert ist, eine Abhängigkeit von Konfigurationsparametern zu Zielgrößen des virtuellen Tests zu definieren.

Des Weiteren umfasst das System eine zweite Recheneinrichtung, welche konfiguriert ist, einen Test-Algorithmus und/oder Parameterintervalle für die jeweilige Zielgröße zu bestimmen, und eine dritte Recheneinrichtung, welche konfiguriert ist, eine Anwendungsbedingung der Konfigurationsparameter, der Parameterintervalle und/oder des Test-Algorithmus festzulegen.

Die Erfindung betrifft darüber hinaus ein computer-implementiertes Verfahren zum Ausführen eines virtuellen Tests unter Verwendung der erfindungsgemäßen Konfiguration, wobei falls die Zielgröße einer Konfiguration einen vorgegebenen Schwellwert überschreitet der virtuelle Test abgebrochen wird und/oder spezifische Parameterwerte der Konfiguration modifiziert werden.

Die Erfindung betrifft überdies ein Computerprogramm mit Programmcode, um das erfindungsgemäße Verfahren zum kriterienbasierten Erstellen einer Konfiguration eines virtuellen Tests zum Testen automatisierter Fahrfunktionen eines Fahrzeugs auszuführen, wenn das Computerprogramm auf einem Computer ausgeführt wird.

Die Erfindung betrifft ferner einen computerlesbaren Datenträger mit Programmcode eines Computerprogramms, um zumindest Teile eines Verfahrens zum kriterienbasierten Erstellen einer Konfiguration eines virtuellen Tests zum Testen automatisierter Fahrfunktionen eines Fahrzeugs auszuführen, wenn das Computerprogramm auf einem Computer ausgeführt wird.

Eine Idee der vorliegenden Erfindung ist es, durch Bestimmen der Abhängigkeit von Konfigurationsparametern zu Zielgrößen des virtuellen Tests das Einbringen von Anwenderwissen für die Parametrierung logischer Szenarien zu ermöglichen.

Durch die Einbeziehung von Informationen des Anwenders kann somit in vorteilhafter Weise eine wesentlich fokussiertere Exploration des Paramterraums und auch eine erleichterte Auswertung der Ergebnisse durch den Anwender ermöglicht werden.

Zusammenhänge können z.B. aus dem Testziel bzw. der Testspezifikation abgeleitet werden, d.h. wenn ein Zusammenhang von einem Konfigurationsparameter zu anderen Zielfunktionen existiert kann dieser explizit ignoriert werden, da dieser nicht im Umfang des Tests liegt.

Das erfindungsgemäße Verfahren zielt daher darauf ab, Anwenderwissen z.B. über Szenario-Layer oder die ODD (Operational Design Domain) der AD-Funktion (Automated Driving Funktion, z.B. Lane Keeping) schrittweise abzufragen und auszuführen. Damit entsteht eine sehr anwendungsorientierte und gleichzeitig effiziente ITC-Konfiguration mit modular-hierarchischer Struktur, die z.B. an der Szenario-Layer oder der ODD-Struktur orientiert ist.

Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung der Erfindung ist vorgesehen, dass die Definition der Abhängigkeit der Konfigurationsparameter zu den Zielgrößen des virtuellen Tests für jede Zielgröße umfasst, dass erste Konfigurationsparameter bestimmt werden, welche einen signifikanten Einfluss auf die jeweilige Zielgröße des virtuellen Tests aufweisen sowie zweite Konfigurationsparameter bestimmt werden, welche einen insignifikanten Einfluss auf die jeweilige Zielgröße des virtuellen Tests aufweisen.

Somit kann bei der Parametrisierung logischer Szenarien zwischen Konfigurationsparametern, die einen wesentlichen Einfluss auf die jeweilige Zielgröße des virtuellen Tests aufweisen und solchen Konfigurationsparametern, die einen unwesentlichen Einfluss auf die jeweilige Zielgröße des virtuellen Tests aufweisen, unterschieden werden.

Gemäß einer weiteren bevorzugten Weiterbildung der Erfindung ist vorgesehen, dass Konfigurationsparameter als erste Konfigurationsparameter klassifiziert werden, wenn eine Differenz der jeweiligen Zielgröße zwischen Verwendung und nicht-Verwendung des Konfigurationsparameters einen vorgegebenen Schwellwert überschreitet, und wobei Konfigurationsparameter als zweite Konfigurationsparameter klassifiziert werden, wenn die Differenz der jeweiligen Zielgröße zwischen Verwendung und nicht-Verwendung des Konfigurationsparameters einen vorgegebenen Schwellwert unterschreitet.

Somit können anhand der oben genannten Metrik diejenigen Konfigurationsparameter ermittelt werden, welche einen durch Überschreiten des Schwellwerts definierten signifikanten Einfluss auf die jeweilige Zielgröße aufweisen sowie jene Konfigurationsparameter ermittelt werden, welche einen durch Unterschreiten des Schwellwerts definierten insignifikanten Einfluss auf die jeweilige Zielgröße aufweisen.

Gemäß einer weiteren bevorzugten Weiterbildung der Erfindung ist vorgesehen, dass das Festlegen der Anwendungsbedingung der Konfigurationsparameter, der Parameterintervalle und/oder des Test-Algorithmus einen Zeitpunkt und/oder Zeitraum einer Parametervariation des virtuellen Tests definiert.

Dadurch kann in vorteilhafter Weise automatisch erkannt werden, wann eine Parametervariation in einem Szenario ablaufen soll. Die Parametervariation läuft dabei in der Regel nicht über die gesamte Dauer des Szenarios, sondern nur in einem zeitlichen Teilintervall, z.B. im Rahmen eines Cut-In-Szenarios, d.h. dem Einscheren eines Ego-Fahrzeugs vor einem Fellow-Fahrzeug oder umgekehrt ab.

Gemäß einer weiteren bevorzugten Weiterbildung der Erfindung ist vorgesehen, dass die Anwendungsbedingung ein vorgegebener Parameterbereich und/oder ein Start- und Endpunkt eines Ereignisses, insbesondere eines Fahrmanövers, des virtuellen Tests ist.

Die Anwendungsbedingung definiert somit z.B. in vorteilhafter Weise eine Startbedingung und/oder eine Endbedingung für die Durchführung bzw. das Auftreten eines Ereignisses, insbesondere eines Fahrmanövers, des virtuellen Tests.

Gemäß einer weiteren bevorzugten Weiterbildung der Erfindung ist vorgesehen, dass durch Festlegen eines ersten Test-Algorithmus für eine erste Zielgröße eine erste Konfiguration des virtuellen Tests durchgeführt wird, und wobei durch Festlegen eines zweiten Test-Algorithmus für eine zweite Zielgröße eine zweite Konfiguration des virtuellen Tests durchgeführt wird, wobei die erste Konfiguration und die zweite Konfiguration des virtuellen Tests einem gleichen Testfall zugeordnet sind.

Somit kann der für die jeweilige Zielgröße optimale Test-Algorithmus eingesetzt werden. Hierdurch entstehen zwei gleichwertige ITC-Konfigurationen parallel zueinander, die jedoch demselben Testfall zugeordnet sind.

Gemäß einer weiteren bevorzugten Weiterbildung der Erfindung ist vorgesehen, dass die zweite Konfiguration des virtuellen Tests mit der ersten Konfiguration des virtuellen Tests durch eine Hierarchiebedingung verknüpft ist.

Werden in den Anwendungsbedingungen für ITC-Konfigurationen wiederum Konfigurationsparameter wie z.B. ein Umweltparameter wie eine Niederschlagsstärke verwendet, dann entstehen Abhängigkeiten zwischen Variationsparametern einer ITC-Konfiguration zu Anwendungsbedingungen einer anderen ITC-Konfiguration. Diese Abhängigkeiten können sodann in vorteilhafter Weise für eine hierarchische ITC- Konfiguration genutzt werden.

Gemäß einer weiteren bevorzugten Weiterbildung der Erfindung ist vorgesehen, dass die Hierarchiebedingung durch einen Konfigurationsparameter der ersten Konfiguration gegeben ist, welcher zumindest einen Konfigurationsparameter der zweiten Konfiguration beeinflusst.

Globale Konfigurationsparameter wie z.B. Umweltbedingungen beeinflussen dabei spezifische Konfigurationsparameter wie z.B. ein Fahrbahnreibwert.

Gemäß einer weiteren bevorzugten Weiterbildung der Erfindung ist vorgesehen, dass sich die Konfigurationsparameter auf zumindest einen Fahrzeugsensor und die Anwendungsbedingung auf einen Fehler des zumindest einen Fahrzeugsensors beziehen.

Beispielweise können sich eine erste Konfiguration auf eine Sensor Layer bzw. Schicht, eine zweite Konfiguration auf eine Content Layer bzw. Schicht und eine dritte Konfiguration auf eine Temporal Layer bzw. Schicht beziehen. Die Temporal Layer weist hierbei einen Zeitbezug auf.

Gemäß einer weiteren bevorzugten Weiterbildung der Erfindung ist vorgesehen, dass sich die Konfigurationsparameter auf einen digitalen Informationsaustausch zwischen Fahrzeugen oder zwischen Fahrzeugen und einer Verkehrsinfrastruktur, auf Umgebungsbedingungen, insbesondere Wetterbedingungen, auf Manöver von Verkehrsteilnehmern, auf statische Objekte, insbesondere Gegenstände, auf die Verkehrsinfrastruktur, auf eine Fahrbahngeometrie und/oder einen Fahrbahnzustand des virtuellen Tests beziehen.

Hierfür wird bevorzugt das sechs Ebenen Modell für Szenarienbeschreibungen gemäß dem PEGASUS Projekt verwendet. Somit lassen sich gezielt ITC-Konfigurationen für Konfigurationsparameter verschiedener Layer erstellen, die dann eine zielgerichtete Parametervariation zulassen.

Gemäß einer weiteren bevorzugten Weiterbildung der Erfindung ist vorgesehen, dass die Zielgröße ein Verhalten eines Ego-Fahrzeugs, ein Verhalten eines weiteren Verkehrsteilnehmers, eine Zeitdauer bis zu einem Aufprall und/oder ein Eingreifen oder nicht-Eingreifen der automatisierten Fahrfunktion ist.

Die Zielgröße des virtuellen Tests gibt somit eine Metrik für ein Testergebnis des virtuellen Tests an.

Die hierin beschriebenen Merkmale des computerimplementierten Verfahrens zum kriterienbasierten Erstellen einer Konfiguration eines virtuellen Tests zum Testen automatisierter Fahrfunktionen eines Fahrzeugs sind ebenso auf das erfindungsgemäße System zum kriterienbasierten Erstellen einer Konfiguration eines virtuellen Tests zum Testen automatisierter Fahrfunktionen eines Fahrzeugs und umgekehrt anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig. 1: ein Ablaufdiagramm eines computerimplementierten Verfahrens zum kriterienbasierten Erstellen einer Konfiguration eines virtuellen Tests zum Testen automatisierter Fahrfunktionen eines Fahrzeugs gemäß einer bevorzugten Ausführungsform der Erfindung; und
- Fig. 2: eine schematische Darstellung eines Systems zum kriterienbasierten Erstellen einer Konfiguration eines virtuellen Tests zum Testen automatisierter Fahrfunktionen eines Fahrzeugs gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

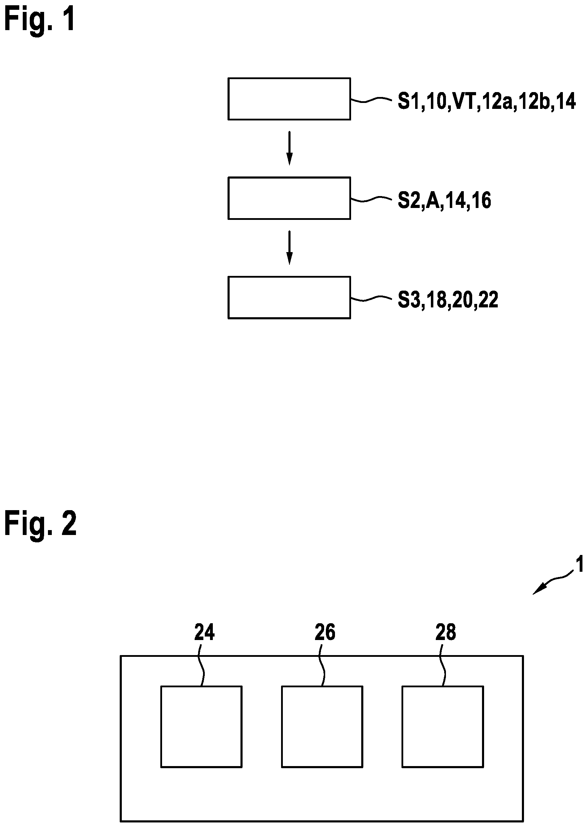

Fig. 1 zeigt ein computer-implementiertes Verfahren zum kriterienbasierten Erstellen einer Konfiguration 10 eines virtuellen Tests VT zum Testen automatisierter Fahrfunktionen eines Fahrzeugs.

Das Verfahren umfasst ein Definieren S1 einer Abhängigkeit von Konfigurationsparametern 12a, 12b zu Zielgrößen 14 des virtuellen Tests VT.

Des Weiteren umfasst das Verfahren ein Bestimmen S2 eines Test-Algorithmus A und/oder von Parameterintervallen 16 für die jeweilige Zielgröße 14, und Festlegen S3 einer Anwendungsbedingung 18 der Konfigurationsparameter 12a, 12b, der Parameterintervalle 16 und/oder des Test-Algorithmus A.

Die Definition der Abhängigkeit der Konfigurationsparameter 12a, 12b zu den Zielgrößen 14 des virtuellen Tests VT für jede Zielgröße 14 umfasst, dass erste Konfigurationsparameter 12a bestimmt werden, welche einen signifikanten Einfluss auf die jeweilige Zielgröße 14 des virtuellen Tests VT aufweisen sowie zweite Konfigurationsparameter 12b bestimmt werden, welche einen insignifikanten Einfluss auf die jeweilige Zielgröße 14 des virtuellen Tests VT aufweisen.

Konfigurationsparameter 12a, 12b werden als erste Konfigurationsparameter 12a klassifiziert, wenn eine Differenz der jeweiligen Zielgröße 14 zwischen Verwendung und nicht-Verwendung des Konfigurationsparameters 12a, 12b einen vorgegebenen Schwellwert 20 überschreitet. Ferner werden Konfigurationsparameter 12a, 12b als zweite Konfigurationsparameter 12b klassifiziert, wenn die Differenz der jeweiligen Zielgröße 14 zwischen Verwendung und nicht-Verwendung des Konfigurationsparameters 12a, 12b einen vorgegebenen Schwellwert 20 unterschreitet.

Das Festlegen der Anwendungsbedingung 18 der Konfigurationsparameter 12a, 12b, der Parameterintervalle 16 und/oder des Test-Algorithmus A definiert hierbei einen Zeitpunkt und/oder Zeitraum einer Parametervariation des virtuellen Tests VT. Die Anwendungsbedingung 18 ist ein vorgegebener Parameterbereich und/oder ein Start- und Endpunkt eines Ereignisses, insbesondere eines Fahrmanövers, des virtuellen Tests VT.

Durch Festlegen eines ersten Test-Algorithmus A für eine erste Zielgröße 14 wird eine erste Konfiguration 10 des virtuellen Tests VT durchgeführt. Ferner wird durch Festlegen eines zweiten Test-Algorithmus A für eine zweite Zielgröße 14 eine zweite Konfiguration 10 des virtuellen Tests VT durchgeführt, wobei die erste Konfiguration 10 und die zweite Konfiguration 10 des virtuellen Tests VT einem gleichen Testfall zugeordnet sind.

Die zweite Konfiguration 10 des virtuellen Tests VT ist ferner mit der ersten Konfiguration 10 des virtuellen Tests VT durch eine Hierarchiebedingung 22 verknüpft. Die Hierarchiebedingung 22 ist durch einen Konfigurationsparameter 12a, 12b der ersten Konfiguration 10 gegeben, welcher zumindest einen Konfigurationsparameter 12a, 12b der zweiten Konfiguration 10 beeinflusst.

Die Konfigurationsparameter 12a, 12b beziehen sich auf zumindest einen Fahrzeugsensor und die Anwendungsbedingung 18 bezieht sich auf einen Fehler des zumindest einen Fahrzeugsensors.

Des Weiteren beziehen sich die Konfigurationsparameter 12a, 12b auf einen digitalen Informationsaustausch zwischen Fahrzeugen oder zwischen Fahrzeugen und einer Verkehrsinfrastruktur, auf Umgebungsbedingungen, insbesondere Wetterbedingungen, auf Manöver von Verkehrsteilnehmern, auf statische Objekte, insbesondere Gegenstände, auf die Verkehrsinfrastruktur, auf eine Fahrbahngeometrie und/oder einen Fahrbahnzustand des virtuellen Tests VT.

Die Zielgröße 14 ist ein Verhalten eines Ego-Fahrzeugs, ein Verhalten eines weiteren Verkehrsteilnehmers, eine Zeitdauer bis zu einem Aufprall und/oder ein Eingreifen oder nicht-Eingreifen der automatisierten Fahrfunktion.

Die Zielgröße bewertet somit das Verhalten automatisierter Fahrfunktionen bezüglich Sicherheit, Komfort und Nutzen.

Im Folgenden ist eine beispielhafte Erläuterung des erfindungsgemäßen Verfahrens aufgeführt.

Die Konfigurationsparameter 12a, 12b verschiedener Layer sind beispielsweise Wetter: Regen.

Anfangsgeschwindigkeiten von Ego und Fellow Fahrzeug, Anfangsabstände und ein Kurvenradius einer Fahrbahn.

Anschließend erfolgt eine Aufteilung in verschiedene ITC-Konfigurationen.

ITC-Konfiguration A: Wetter: Regen. Parametervariation: Regenstärke = {DEFAULT:Null, leicht, moderat, schwer}. Leistungskennzahlen (KPIs): Kein ABS-Eingriff, kein ESP-Eingriff, Fellow Fahrzeug stets durch Kamera-Sensor detektiert. ITC-Algorithmus: "Brute-Force" (alle Werte anwenden).

ITC-Konfiguration B: Objekte. Parametervariation: Vego = [50km/h...DEFAULT:100km/h...150km/h], VFellow = [50km/h...DEFAULT:80km/h...150km/h], Abstand zwischen Ego und Fellow-Fahrzeug = [-80m... DEFAULT:0m...+80m], KPIs: Zeitdauer bis Aufprall > 1s, Gefahrenstufe > 1. ITC-Algorithm: "SEA" (Stochastic Evolutionary Algorithm für eine Suche der Grenzbereiche).

ITC-Konfiguration C: Road-Level-Parameter. Parametervariation: Kurvenradius = [10m, 50m, 100m, DEFAULT: Unendlich]. KPIs:(Laterale Beschleunigung) < 0.3m/s². ITC-Algorithmus: "Brute-Force" (alle Werte anwenden).

Die entsprechenden Konfigurationsparameter und Wertebereiche kann der Entwickler aus den ihm vorliegenden Anforderungen ablesen.

Das erfindungsgemäße Verfahren unterstützt ferner die Eingabe der zugehörigen ITC-Konfigurationen (hier A, B, C) durch eine Nutzoberfläche oder Konfigurationssprache, die das Konzept von Szenario-Layern unterstützt.

Beispiel für die Durchführung des ITC-Experiments:
Schritt I: Variation ITC-Konfiguration A. Für ITC-Konfiguration B und C => Setzen von Default-Parameterwerten (bekannt als "einfach beherrschbar"), nur Parameter der ITC-Konfiguration A => variieren gemäß Verfahren (im Beispiel BruteForce, alle ausprobieren).

Weiter zum nächsten Schritt, aber falls KPIs auf irgendeiner Ebene auffällig (Schwellwert erreicht oder überschritten):
Option 1 => nicht weiter testen, da Probleme sich weiter verschlimmern würden für anspruchsvollere Kombinationen von Parametern auf anderen Ebenen, SUT (System-under-Test) verbessern und erneut mit Schritt I starten.
Option 2 => Herausnahme kritischer Parameterwerte und weiter zum nächsten Schritt.

Schritt II: Variation ITC-Konfiguration B. Für ITC-Konfiguration A und C => Setzen von Default-Parameterwerten (bekannt als "einfach beherrschbar") nur Parameter der ITC-Konfiguration B => variieren gemäß Verfahren (im Beispiel SEA).

Weiter zum nächsten Schritt, aber falls KPIs auf irgendeiner Ebene auffällig (Schwellwert erreicht oder überschritten):
Option 1 => nicht weiter testen, da Probleme sich weiter verschlimmern würden für anspruchsvollere Kombinationen von Parametern auf anderen Ebenen, SUT (System-under-Test) verbessern und erneut mit Schritt I starten.
Option 2 => Herausnahme der kritischen Parameterwerte und weiter zum nächsten Schritt.

Schritt III: Variation ITC-Konfiguration C. Für ITC-Konfiguration A und B => Setzen von Default-Parameterwerten (bekannt als "einfach beherrschbar") nur Parameter der ITC-Konfiguration C => variieren gemäß Verfahren (im Beispiel BruteForce, alle ausprobieren).

Weiter zum nächsten Schritt, aber falls KPIs auf irgendeiner Ebene auffällig (Schwellwert erreicht oder überschritten):
Option 1 => nicht weiter testen, da Probleme sich weiter verschlimmern würden für anspruchsvollere Kombinationen von Parametern auf anderen Ebenen, SUT (System-under-Test) verbessern und erneut mit Schritt I starten.
Option 2 => Herausnahme der kritischen Parameterwerte und weiter zum nächsten Schritt.

Schritt IV: Auswertung (optional auch nach jedem Schritt) des ITC-Experiments.

Schritt V: Rekonfiguration und Iteration. Sind die Ergebnisse nicht zufriedenstellend muss eine SUT-Verbesserung erfolgen und mit Schritt I wieder gestartet werden.

Die Menge der entfernten Parameterwerte wird nachgehalten und muss am Ende (möglichst) leer sein. Sind die Ergebnisse zufriedenstellend, wurden aber kritische Parameterwerte aus den Wertebereichen entfernt, so müssen sie wieder hinzugefügt werden sobald eine aussichtsreiche Lösung für ihre Beherrschung implementiert wurde (SUT-Update). Dann erneut mit Schritt I starten.

Sind die Ergebnisse zufriedenstellend und sind keine Parameterwerte mehr aus den Wertebereichen entfernt, so werden die Default-Parameterwerte verschärft und es wird erneut mit Schritt I gestartet. Ein Abbruch erfolgt sobald das SUT im Rahmen der ODD und der Anforderungen fehlerfrei funktioniert.

Das erfindungsgemäße Verfahren besteht damit aus dem Aufbau und der Ausführung einer Kette von verknüpften modular-hierarchischen ITC-Einzelkonfigurationen jeweils niedriger Problemdimension (Dimension bedeutet hierbei die Anzahl der betrachteten KPIs und variierten Parameter). Dies führt zu mehreren Vorteilen. Die Konfiguration ist übersichtlicher und durch den modular-hierarchischen Aufbau problemangepasst. Die Ausführung ist effizienter, da weniger Simulationsjobs benötigt werden (durch Kontext und niedrigere Dimension.

Die Ausführung wird mit Entwicklungsschritten des SUT gekoppelt, wobei die Anforderungen an das SUT schrittweise erhöht werden bis sie akzeptabel sind. Die Ergebnisse sind kompakter (niedrigere Dimensionen) und besser zu verstehen (durch modular-hierarchischen Aufbau und Einzelschritte).

Fig. 2 zeigt eine schematische Darstellung eines Systems zum kriterienbasierten Erstellen einer Konfiguration 10 eines virtuellen Tests VT zum Testen automatisierter Fahrfunktionen eines Fahrzeugs gemäß der bevorzugten Ausführungsform der Erfindung.

Das System umfasst eine erste Recheneinrichtung 24, welche konfiguriert ist, eine Abhängigkeit von Konfigurationsparametern 12a, 12b zu Zielgrößen 14 des virtuellen Tests VT zu definieren.

Des Weiteren umfasst das System eine zweite Recheneinrichtung 26, welche konfiguriert ist, einen Test-Algorithmus A und/oder Parameterintervalle 16 für die jeweilige Zielgröße 14 zu bestimmen und eine dritte Recheneinrichtung 28, welche konfiguriert ist, eine Anwendungsbedingung 18 der Konfigurationsparameter 12a, 12b, der Parameterintervalle 16 und/oder des Test-Algorithmus A festzulegen.

Obwohl hierin spezifische Ausführungsformen illustriert und beschrieben wurden, ist es dem Fachmann verständlich, dass eine Vielzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken.

Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden können, ohne vom Umfang der beigefügten Ansprüche und ihrer rechtlichen Äquivalente abzuweichen.

Im Allgemeinen beabsichtigt diese Anmeldung, Änderungen bzw. Anpassungen oder Variationen der hierin dargestellten Ausführungsformen abzudecken.

Beispielsweise kann eine Reihenfolge der Verfahrensschritte abgeändert werden. Das Verfahren kann ferner zumindest abschnittsweise sequentiell oder parallel durchgeführt werden.

### Bezugszeichenliste

- 1: System
- 10: Konfiguration
- 12a: erster Konfigurationsparameter
- 12b: zweiter Konfigurationsparameter
- 14: Zielgröße
- 16: Parameterintervall
- 18: Anwendungsbedingung
- 20: Schwellwert
- 22: Hierarchiebedingung
- 24: erste Recheneinrichtung
- 26: zweite Recheneinrichtung
- 28: dritte Recheneinrichtung
- A: Test-Algorithmus
- VT: virtueller Test
- S1-S3: Verfahrensschritte

## Patentansprüche

1. Computer-implementiertes Verfahren zum kriterienbasierten Erstellen einer Konfiguration (10) eines virtuellen Tests (VT) zum Testen automatisierter Fahrfunktionen eines Fahrzeugs, mit den Schritten:
Definieren (S1) einer Abhängigkeit von Konfigurationsparametern (12a, 12b) zu Zielgrößen (14) des virtuellen Tests (VT);
Bestimmen (S2) eines Test-Algorithmus (A) und/oder von Parameterintervallen (16) für die jeweilige Zielgröße (14); und
Festlegen (S3) einer Anwendungsbedingung (18) der Konfigurationsparameter (12a, 12b), der Parameterintervalle (16) und/oder des Test-Algorithmus (A).

2. Computer-implementiertes Verfahren nach Anspruch 1, wobei die Definition der Abhängigkeit der Konfigurationsparameter (12a, 12b) zu den Zielgrößen (14) des virtuellen Tests (VT) für jede Zielgröße (14) umfasst, dass erste Konfigurationsparameter (12a) bestimmt werden, welche einen signifikanten Einfluss auf die jeweilige Zielgröße (14) des virtuellen Tests (VT) aufweisen sowie zweite Konfigurationsparameter (12b) bestimmt werden, welche einen insignifikanten Einfluss auf die jeweilige Zielgröße (14) des virtuellen Tests (VT) aufweisen.

3. Computer-implementiertes Verfahren nach Anspruch 2, wobei Konfigurationsparameter (12a, 12b) als erste Konfigurationsparameter (12a) klassifiziert werden, wenn eine Differenz der jeweiligen Zielgröße (14) zwischen Verwendung und nicht-Verwendung des Konfigurationsparameters (12a, 12b) einen vorgegebenen Schwellwert (20) überschreitet, und wobei Konfigurationsparameter (12a, 12b) als zweite Konfigurationsparameter (12b) klassifiziert werden, wenn die Differenz der jeweiligen Zielgröße (14) zwischen Verwendung und nicht-Verwendung des Konfigurationsparameters (12a, 12b) einen vorgegebenen Schwellwert (20) unterschreitet.

4. Computer-implementiertes Verfahren nach einem der vorhergehenden Ansprüche, wobei das Festlegen der Anwendungsbedingung (18) der Konfigurationsparameter (12a, 12b), der Parameterintervalle (16) und/oder des Test-Algorithmus (A) einen Zeitpunkt und/oder Zeitraum einer Parametervariation des virtuellen Tests (VT) definiert.

5. Computer-implementiertes Verfahren nach einem der vorhergehenden Ansprüche, wobei die Anwendungsbedingung (18) ein vorgegebener Parameterbereich und/oder ein Start- und Endpunkt eines Ereignisses, insbesondere eines Fahrmanövers, des virtuellen Tests (VT) ist.

6. Computer-implementiertes Verfahren nach einem der vorhergehenden Ansprüche, wobei durch Festlegen eines ersten Test-Algorithmus (A) für eine erste Zielgröße (14) eine erste Konfiguration (10) des virtuellen Tests (VT) durchgeführt wird, und wobei durch Festlegen eines zweiten Test-Algorithmus (A) für eine zweite Zielgröße (14) eine zweite Konfiguration (10) des virtuellen Tests (VT) durchgeführt wird, wobei die erste Konfiguration (10) und die zweite Konfiguration (10) des virtuellen Tests (VT) einem gleichen Testfall zugeordnet sind.

7. Computer-implementiertes Verfahren nach Anspruch 6, wobei die zweite Konfiguration (10) des virtuellen Tests (VT) mit der ersten Konfiguration (10) des virtuellen Tests (VT) durch eine Hierarchiebedingung (22) verknüpft ist.

8. Computer-implementiertes Verfahren nach Anspruch 7, wobei die Hierarchiebedingung (22) durch einen Konfigurationsparameter (12a, 12b) der ersten Konfiguration (10) gegeben ist, welcher zumindest einen Konfigurationsparameter (12a, 12b) der zweiten Konfiguration (10) beeinflusst.

9. Computer-implementiertes Verfahren nach einem der vorhergehenden Ansprüche, wobei sich die Konfigurationsparameter (12a, 12b) auf zumindest einen Fahrzeugsensor und die Anwendungsbedingung (18) auf einen Fehler des zumindest einen Fahrzeugsensors beziehen.

10. Computer-implementiertes Verfahren nach einem der vorhergehenden Ansprüche, wobei sich die Konfigurationsparameter (12a, 12b) auf einen digitalen Informationsaustausch zwischen Fahrzeugen oder zwischen Fahrzeugen und einer Verkehrsinfrastruktur, auf Umgebungsbedingungen, insbesondere Wetterbedingungen, auf Manöver von Verkehrsteilnehmern, auf statische Objekte, insbesondere Gegenstände, auf die Verkehrsinfrastruktur, auf eine Fahrbahngeometrie und/oder einen Fahrbahnzustand des virtuellen Tests (VT) beziehen.

11. Computer-implementiertes Verfahren nach einem der vorhergehenden Ansprüche, wobei die Zielgröße (14) ein Verhalten eines Ego-Fahrzeugs, ein Verhalten eines weiteren Verkehrsteilnehmers, eine Zeitdauer bis zu einem Aufprall und/oder ein Eingreifen oder nicht-Eingreifen der automatisierten Fahrfunktion ist.

12. Computer-implementiertes Verfahren zum Ausführen eines virtuellen Tests (VT) unter Verwendung der Konfiguration (10) nach einem der Ansprüche 1 bis 11, wobei falls die Zielgröße (14) einer Konfiguration (10) einen vorgegebenen Schwellwert (20) überschreitet der virtuelle Test (VT) abgebrochen wird und/oder spezifische Parameterwerte der Konfiguration (10) modifiziert werden.

13. System (1) zum kriterienbasierten Erstellen einer Konfiguration (10) eines virtuellen Tests (VT) zum Testen automatisierter Fahrfunktionen eines Kraftfahrzeugs, umfassend:
eine erste Recheneinrichtung (24), welche konfiguriert ist, eine Abhängigkeit von Konfigurationsparametern (12a, 12b) zu Zielgrößen (14) des virtuellen Tests (VT) zu definieren;
eine zweite Recheneinrichtung (26), welche konfiguriert ist, einen Test-Algorithmus (A) und/oder Parameterintervalle (16) für die jeweilige Zielgröße (14) zu bestimmen; und
eine dritte Recheneinrichtung (28), welche konfiguriert ist, eine Anwendungsbedingung (18) der Konfigurationsparameter (12a, 12b), der Parameterintervalle (16) und/oder des Test-Algorithmus (A) festzulegen.

14. Computerprogrammprodukt mit einem Computerprogramm, das Softwaremittel zur Durchführung eines Verfahrens nach einem der Ansprüche 1 bis 11 und/oder eines Verfahrens nach Anspruch 12 umfasst, wobei das Computerprogramm auf einem Computer ausgeführt wird.

15. Computerlesbarer Datenträger mit Programmcode eines Computerprogramms, um zumindest Teile eines Verfahrens nach einem der Ansprüche 1 bis 11 und/oder eines Verfahrens nach Anspruch 12 auszuführen, wenn das Computerprogramm auf einem Computer ausgeführt wird.
